# EUROPÄISCHE PATENTSCHRIFT

(11) **EP 3 977 211 B1**
(45) Veröffentlichungstag und Bekanntmachung des Hinweises auf die Patenterteilung: **13.11.2024**
(21) Anmeldenummer: 20728401.9
(22) Anmeldetag: 05.05.2020
(51) Int. Cl.: H04L 43/0817, H04L 41/0816, H04L 41/0659

(54) **STEUERANLAGE UND VERFAHREN ZUM BETREIBEN EINER STEUERANLAGE**
CONTROL SYSTEM AND METHOD FOR OPERATING A CONTROL SYSTEM
SYSTÈME DE COMMANDE ET PROCÉDÉ POUR FAIRE FONCTIONNER UN SYSTÈME DE COMMANDE

(30) Priorität: 28.05.2019 DE 102019207809
(43) Veröffentlichungstag der Anmeldung: 06.04.2022
(73) Patentinhaber: Siemens Mobility GmbH, 81739 München (DE)
(72) Erfinder: GRIEBEL, Stephan, 38302 Wolfenbüttel (DE)
(74) Vertreter: Siemens Patent Attorneys
(86) Internationale Anmeldenummer: PCT/EP2020/062381
(87) Internationale Veröffentlichungsnummer: WO 2020/239370

(56) Entgegenhaltungen:
- EP-A1- 1 752 642
- DE-A1- 10 211 279
- DE-A1- 102004 008 251
- DE-A1- 102008 060 005
- DE-A1- 102015 203 250
- DE-A1- 19 826 131
- DE-A1- 19 927 635

## Beschreibung

Die Erfindung betrifft eine Steueranlage und ein Verfahren zum Betreiben einer Steueranlage.

Steueranlagen, insbesondere Steueranlagen von Mobilitätssystemen, industriellen Anlagen oder Gebäudesystemen, umfassen in der Regel einen zentralen (gegebenenfalls mehrkanaligen) Rechner beziehungsweise eine Recheneinheit, um einen oder mehrere Aktoren der Steueranlage oder sonstige Komponenten der Steueranlage ausreichend sicher anzusteuern und zu überwachen. Hierbei sind in der Regel sogenannte Fail-Safe-Prinzipien (Sicherheit bei Auftreten eines Fehlerfalles) und Maßnahmen zur Einnahme und Beibehaltung eines sicheren Zustandes der Steueranlage einzuhalten. Verschiedene Maßnahmen zur Erfüllung derartiger Prinzipien sind zum Beispiel durch Definieren sogenannter Sicherheitsintegritätslevel (SIL) vorgegeben.

Entsprechend implementierte zentrale Rechner beziehungsweise Recheneinheiten innerhalb einer Steueranlage sind aufwendig und teuer in ihrer Implementierung, insbesondere um die erläuterten Sicherheitsanforderungen zu erfüllen.

Dokument DE 102 11 279 A1 betrifft ein Verfahren, bei welchem mindestens ein weiterer an ein Kommunikationssystem angeschlossener Prozessrechner die Funktionsfähigkeit mindestens eines ersten an das System angeschlossenen Prozessrechners überprüft und bei Erkennen eines Fehlers eine Steuernachricht über das System sendet, um den ersten Prozessor zu steuern. Es wird geprüft, ob der sendende Prozessor berechtigt ist, den ersten Prozessor zu steuern und im Kommunikationssystem aktiv ist.

DE 198 26 131 A1 betrifft ein Mittel zur Optimierung der Zuverlässigkeit und Vielseitigkeit beim Betrieb einer elektrischen Bremsvorrichtung für Kraftfahrzeuge und umfasst eine erste Einheit, die das Betätigungssignal von mindestens einem von einem Fahrer betätigbaren Bremsbetätigungselement empfängt und den Einstellwert zum Steuern einer Radbremse basierend auf dem Betätigungssignal bestimmt, sowie zweite Einheiten, die sich auf die Radbremse beziehen und den Sollwert in das Steuersignal für die Radbremse umwandeln.

Es ist eine Aufgabe der Erfindung eine Steueranlage sowie ein Verfahren zum Betreiben einer Steueranlage zu beschreiben, die eine einfachere Implementierung erlauben und mit der dennoch Fehler detektierbar sind, die unabhängig von einem Zustand des Aktors (oder einem Fehler innerhalb des Aktors) auch durch ein Fehlverhalten oder eine Fehlfunktion der Steuer-Komponente oder der Wächter-Komponente ausgelöst werden können. k

Diese Aufgabe wird gemäß einem ersten Aspekt durch eine Steueranlage nach Patentanspruch 1 gelöst. Weitere Ausführungsformen und Implementierungen sind in den zugehörigen Unteransprüchen offenbart.

Die Steueranlage weist wenigstens einen Aktor und mehrere Steuer-Komponenten auf. Die Steuer-Komponenten sind eingerichtet den Aktor zu steuern und eine erste Zustandsinformation zu generieren. Die Steueranlage weist mehrere Wächter-Komponenten auf, die eingerichtet sind einen Zustand des Aktors zu überwachen und eine zweite Zustandsinformation zu generieren. Des Weiteren weist die Steueranlage ein Kommunikationsnetzwerk auf. Die Wächter-Komponenten und die Steuer-Komponenten sind in das Kommunikationsnetzwerk eingebunden und eingerichtet, untereinander die ersten und zweiten Zustandsinformationen über das Kommunikationsnetzwerk auszutauschen. Die Wächter-Komponenten und die Steuer-Komponenten sind jeweils eingerichtet die (ausgetauschten) ersten und zweiten Zustandsinformationen miteinander zu vergleichen. Alternativ oder ergänzend sind die Wächter-Komponenten und die Steuer-Komponenten jeweils eingerichtet die erste und/oder zweite Zustandsinformation entsprechend mit vorbestimmten Zustandsinformationen zu vergleichen.

Sowohl die, d. h. (an dieser Stelle und auch nachfolgend) jede, Wächter-Komponente als auch die, d. h. (an dieser Stelle und auch nachfolgend) jede, Steuer-Komponente sind eingerichtet die Steueranlage in einen sicheren Zustand zu überführen, wenn ein Vergleich der ersten und zweiten Zustandsinformationen miteinander und/oder entsprechend mit den vorbestimmten Zustandsinformationen ein Abweichen der ersten und zweiten Zustandsinformationen voneinander und/oder entsprechend von den vorbestimmten Zustandsinformationen ergibt.

Ein Vorteil der hier beschriebenen Steueranlage besteht darin, dass eine sichere Steuerung und Überwachung durch einen Verbund der wenigstens einen Wächter-Komponente und der wenigstens einen Steuer-Komponente innerhalb des Kommunikationsnetzwerkes innerhalb der Steueranlage durchgeführt werden kann. Die Wächter-Komponente beziehungsweise die Steuer-Komponente sind einfach und kostengünstig. Im Vergleich zu herkömmlichen Lösungen mit einem zentralen Rechner beziehungsweise einer zentralen und aufwendigen Recheneinheit ist die Steueranlage der hier erläuterten Art einfacher und preiswerter zu implementieren und gewährleistet dennoch einen sehr hohen Grad an Sicherheit. Dieser Grad an Sicherheit kann in Sicherheitsnachweisführungen durch Erfüllung der entsprechenden Normenanforderungen belegt werden.

Dadurch, dass die Steuer-Komponente und die Wächter-Komponente jeweils eingerichtet sind separat voneinander erste und zweite Zustandsinformationen zu generieren und über das Kommunikationsnetzwerk untereinander auszutauschen sowie die Steuer-Komponente und die Wächter-Komponente eingerichtet sind die ausgetauschten ersten und zweiten Zustandsinformationen jeweils miteinander (oder entsprechend einzeln mit vorbestimmten Zustandsinformationen) zu vergleichen (entweder Vergleich der ersten und zweiten Zustandsinformationen in der Wächter-Komponente und/oder Vergleich der ersten und zweiten Zustandsinformationen in der Steuer-Komponente und/oder Vergleich der ersten bzw. zweiten Zustandsinformationen mit vorbestimmten Zustandsinformationen in der Wächter-Komponente und/oder Vergleich der ersten bzw. zweiten Zustandsinformationen mit vorbestimmten Zustandsinformationen in der Steuer-Komponente) ist eine Mehrkanaligkeit einer Überwachung und/oder Überführung der Steueranlage in einen sicheren Zustand gegeben. Dadurch, dass die Steueranlage sowohl von der Wächter-Komponente als auch von der Steuer-Komponente in einen sicheren Zustand überführbar ist, ist ein Fail-Safe-Prinzip erfüllt. Auf diese Weise ist die Steueranlage der hier erläuterten Art ausreichend sicher in dem Sinne, dass ausreichender Schutz sowohl gegen systematische als auch gegen zufällige Fehler gewährleistet ist. Die Steueranlage ist somit derart konstruiert, dass sie einen besonders hohen Sicherheitsintegritätslevel erfüllt. Zum Beispiel ist ein Sicherheitsintegritätslevel SIL-2, SIL-3 oder eventuell höher gemäß der Norm EN50129:2018 erzielbar.

Ein weiterer Vorteil der hier erläuterten Steueranlage ist, dass diese sehr leicht um weitere Komponenten erweiterbar beziehungsweise skalierbar ist. Erfindungsgemäß weist die Steueranlage eine Anzahl, insbesondere eine Mehrzahl k an Aktoren, eine Mehrzahl m an Steuer-Komponenten sowie eine Mehrzahl n an Wächter-Komponenten auf. Insbesondere erlaubt eine Mehrzahl m an Steuer-Komponenten sowie eine Mehrzahl n an Wächter-Komponenten eine gute Skalierbarkeit für verschiedenste Anwendungsfälle, wobei durch das Zusammenspiel der m Steuer-Komponenten sowie der n Wächter-Komponenten innerhalb des Kommunikationsnetzwerkes eine Redundanz bzw. Mehrkanaligkeit einer Ansteuerung, Überwachung und Überführung der Steueranlage in den sicheren Zustand ermöglicht ist. Vorteilhaft ist jede der m Steuer-Komponenten beziehungsweise jede der n Wächter-Komponenten eingerichtet, erste bzw. zweite Zustandsinformationen einer oder mehrerer anderer der m Steuer-Komponenten bzw. anderer der n Wächter-Komponenten über das Kommunikationsnetzwerk zu erhalten und einen Vergleich von ersten und zweiten Zustandsinformationen miteinander oder entsprechend mit vorbestimmten Zustandsinformationen durchzuführen. Vorteilhaft ist jede der m Steuer-Komponenten beziehungsweise jede der n Wächter-Komponenten eingerichtet die Steueranlage nach einem entsprechenden Vergleich in den sicheren Zustand zu überführen.

Systematisch auftretende oder zufällig auftretende Fehler werden durch die Steueranlage dadurch erkannt, dass durch die jeweilige Steuer-Komponente die erste Zustandsinformation generiert wird und durch die jeweilige Wächter-Komponente eine separate zweite Zustandsinformation generiert wird, wobei die Wächter-Komponente und die Steuer-Komponente eingerichtet sind, die untereinander ausgetauschten ersten und zweiten Zustandsinformationen miteinander oder entsprechend mit vorbestimmten Zustandsinformationen zu vergleichen. Sowohl die Wächter-Komponente als auch die Steuer-Komponente sind eingerichtet, die Steueranlage in den sichere Zustand zu überführen, falls ein Abweichen der ersten und zweiten Zustandsinformationen voneinander oder von vorbestimmten Zustandsinformationen in der Wächter-Komponente und/oder in der Steuer-Komponente erkannt wird, was auf einen Fehlerfall rückschließen lässt.

Erfindungsgemäß enthält die erste Zustandsinformation eine Information über einen durch die Steuer-Komponente erfassten (Soll-)Zustand des Aktors. In dieser Ausführungsform ist die zweite Zustandsinformation eine Information über einen von der Wächter-Komponente erfassten (Ist-)Zustand des Aktors. Auf diese Weise sind die Steuer-Komponente und die Wächter-Komponente eingerichtet, getrennt voneinander einen oder mehrere Zustände des Aktors zu erfassen und diese Zustandsinformationen miteinander und/oder mit vorbestimmten Zustandsinformationen zu vergleichen. Fallen diese Zustandsinformationen auseinander, so ist dies ein Indiz dafür, dass ein Fehler im Aktor und/oder ein Fehler in einer der Steuer-Komponente oder der Wächter-Komponente vorliegt, was durch die jeweils andere Komponente erkennbar ist. Wie oben erläutert, sind die Steuer-Komponente und die Wächter-Komponente eingerichtet, in diesem Fall die Steueranlage in einen sicheren Zustand zu überführen.

Erfindungsgemäß enthält die erste Zustandsinformation eine Information über den Zustand der Steuer-Komponente, während die zweite Zustandsinformation eine Information über einen Zustand der Wächter-Komponente ist. In diesen Ausführungsformen sind die ersten und zweiten Zustandsinformationen somit Informationen über Zustände der Steuer-Komponente und der Wächter-Komponente unabhängig von einem Zustand des Aktors. Erfindungsgemäß sind somit in diesen Ausführungsformen die ersten und zweiten Zustandsinformationen kombinierte Informationen sowohl über Zustände der Steuer-Komponente und der Wächter-Komponente als auch über einen oder mehrere Zustände des Aktors. In solchen Implementierungen der Steueranlage sind auf diese Weise Fehler detektierbar, die unabhängig von einem Zustand des Aktors (oder einem Fehler innerhalb des Aktors) auftreten, sondern rein durch ein Fehlverhalten oder eine Fehlfunktion der Steuer-Komponente oder der Wächter-Komponente ausgelöst werden. Auch in diesen Implementierungen sind die Steuer-Komponente und die Wächter-Komponente entsprechend eingerichtet die ersten und zweiten Zustandsinformationen untereinander auszutauschen und miteinander und/oder mit vorbestimmten Zustandsinformationen zu vergleichen, wie oben erläutert. Umfassen zum Beispiel die ersten und zweiten Zustandsinformationen übereinstimmende Informationen über einen Normalbetriebszustand der Wächter-Komponente und der Steuer-Komponente, so stimmen die ersten und zweiten Zustandsinformationen überein. Enthält jedoch eine der ersten und zweiten Zustandsinformationen zum Beispiel Angaben über einen abweichenden Zustand der Steuer-Komponente beziehungsweise der Wächter-Komponente, so weichen die ersten und zweiten Zustandsinformationen voneinander ab, was in der jeweils anderen Komponente erkennbar ist. Die andere Komponente ist eingerichtet, die Steueranlage in einem solchen Fall in den sicheren Zustand zu überführen.

In diversen Ausführungsformen sind die Steuer-Komponente und/oder die Wächter-Komponente als preiswerte Kleinstprozessoren konfiguriert, die über einen Netzwerkanschluss zum Anbinden an das Kommunikationsnetzwerk und über entsprechende Performanz verfügen, um die geforderten Funktionalitäten umzusetzen. Hierbei muss es sich nicht um proprietäre Komponenten handeln. Vielmehr sind die Steuer-Komponente und die Wächter-Komponente vorteilhaft als preiswerte Standardkomponenten ausgeführt, die flexibel und anpassbar in der Steueranlage eingesetzt und konfiguriert werden können.

In diversen Ausführungsformen der Steueranlage weist diese eine zentrale Energieversorgung zur Versorgung der Steueranlage mit elektrischer Energie auf. Dabei sind sowohl die (wenigstens eine) Wächter-Komponente als auch die (wenigstens eine) Steuer-Komponente eingerichtet zum Überführen der Steueranlage in den sicheren Zustand die zentrale Energieversorgung abzuschalten. In diesen Ausführungsformen sind die (wenigstens eine) Wächter-Komponente und/oder die (wenigstens eine) Steuerkomponente derart eingerichtet, dass ein Abschalten der Energieversorgung erfolgt, wenn der Vergleich der ersten und zweiten Zustandsinformationen miteinander oder entsprechend mit vorbestimmten Zustandsinformationen ein Abweichen der ersten und zweiten Zustandsinformationen voneinander oder entsprechend von den vorbestimmten Zustandsinformationen ergibt. Auf diese Weise ist die Steueranlage durch Abschalten der zentralen Energieversorgung in den sicheren Zustand überführbar. Somit ist die Steueranlage in einem Fehlerfall sicher abschaltbar, wodurch eine ausreichende Beibehaltung des sicheren Zustands gewährleistet wird. Dies trägt ebenfalls dazu bei, dass die Steueranlage gemäß einem hohen Sicherheitsintegritätslevel eingerichtet ist.

In diversen Ausführungsformen der Steueranlage ist das Kommunikationsnetzwerk als Drahtlos-Netzwerk eingerichtet. Dies hat den Vorteil, dass die Komponenten der Steueranlage, insbesondere die Steuer-Komponente und/oder die Wächter-Komponente als verteilte Komponenten an verteilten und separaten Einsatzorten der Anlage konfigurierbar sind, zum Beispiel mehreren verteilten Aktoren der Steueranlage zugeordnet sind. Durch das Drahtlos-Netzwerk ist ein flexibles, anpassbares und leicht skalierbares Kommunikationsnetzwerk zwischen den jeweiligen Komponenten gewährleistet.

In diversen Ausführungsformen der Steueranlage weist diese weiter wenigstens eine Erfassungs-Komponente auf, die eingerichtet ist, einen Zustand des Aktors zu erfassen und eine Information über den erfassten Zustand an die Wächter-Komponente zu übergeben. Das bedeutet, dass die Wächter-Komponente den Zustand des Aktors anhand der Information der Erfassungs-Komponente über den erfassten Zustand des Aktors überwacht. In diversen Ausführungsformen ist die Erfassungs-Komponente ein Sensor oder ein System aus mehreren Sensoren. In weitergehenden Ausführungsformen sind mehrere Erfassungs-Komponenten zu einem Erfassungssystem zusammengefasst. Die Erfassungs-Komponente umfasst zum Beispiel Fotodetektoren zur (rückwirkungsfreien) Überwachung des Zustands eines lichtemittierenden Aktors, ein Glasfaserkonstrukt zur (rückwirkungsfreien) Detektion von mechanischen Schaltvorgängen an einem Aktor mittels einer Erschütterungsdetektion (sogenanntes Fiber Optic Sensing) oder eine induktive Manschette zur (rückwirkungsfreien) Detektion von elektrischen Strömen an oder in einem Aktor.

In wenigstens einer Ausführungsform weist die Steueranlage des Weiteren wenigstens eine Erfassung-Komponente auf, die eingerichtet ist, einen Zustand des Aktors zu erfassen und eine Information über den erfassten Zustand an die Steuer-Komponente zu übergeben. In diesen Implementierungen erfasst die Steuer-Komponente einen Zustand des Aktors anhand der Information der Erfassungs-Komponente über den erfassten Zustand des Aktors. Die Steuer-Komponente ist hierbei derart eingerichtet, dass sie Zustandsinformationen des Aktors erfasst und diese für eine Steuerung des Aktors (zum Beispiel über Steuersignale der Steuer-Komponente in Richtung des Aktors) heranzieht.

In wenigstens einer Ausführungsform der Steueranlage ist die Wächter-Komponente eingerichtet den Zustand des Aktors rückwirkungsfrei und/oder unabhängig von der Steuer-Komponente zu überwachen. Ein rückwirkungsfreies Überwachen bedeutet hierbei, dass ein Überwachen des Zustands des Aktors durch die Wächter-Komponente keine Auswirkung auf den Zustand des Aktors (und gegebenenfalls auch keine Auswirkung auf Zustände sonstiger Komponenten innerhalb der Steueranlage oder auf das Kommunikationsnetzwerk) hat. Eine Überwachung unabhängig von der Steuer-Komponente durch die Wächter-Komponente bedeutet, dass über die Wächter-Komponente eine Rückmeldung über einen oder mehrere Zustände des Aktors erhalten wird, die über einen anderen und separaten Kanal erfolgt als eine Rückmeldung zwischen dem Aktor und der Steuer-Komponente. Diese Ausführungsform hat somit den Vorteil, dass trotz einfacher und preiswerter Komponenten eine Mehrkanaligkeit der Steueranlage im Sinne eines Sicherheitskonzepts der oben erläuterten Art auf einfache Weise realisierbar ist. Ein Überwachen des Zustands des Aktors über die Wächter-Komponente erfolgt somit separat zu einem etwaigen Überwachen des Zustands des Aktors über die Steuer-Komponente. Die erste Zustandsinformation wird auf diese Weise separat und unabhängig von der zweiten Zustandsinformation generiert, wodurch zwei separate Kanäle zur Erkennung möglicher Fehler im Aktor, in der Steuer-Komponente oder in der Wächter-Komponente realisiert sind.

In diversen Ausführungsformen der Steueranlage sind im Kommunikationsnetzwerk eine oder mehrere vorbestimmte Zustandsinformationen über definierte Zustände des Aktors und/oder der Steuer-Komponente und/oder der Wächter-Komponente hinterlegt. In wenigstens einer Ausführungsform entsprechen diese vorbestimmten Zustandsinformationen den vorbestimmten Zustandsinformationen der oben erläuterten Art. Die Steuer-Komponente und/oder die Wächter-Komponente sind eingerichtet, die erste und/oder zweite Zustandsinformation mit den vorbestimmten Zustandsinformationen zu vergleichen. Des Weiteren sind sowohl die Wächter-Komponente als auch die Steuer-Komponente eingerichtet, die Steueranlage in den sicheren Zustand zu überführen, wenn ein Vergleich der ersten und/oder zweiten Zustandsinformation mit den vorbestimmten Zustandsinformationen ein Abweichen der ersten und/oder zweiten Zustandsinformation von den vorbestimmten Zustandsinformationen ergibt. In diesen Ausführungsformen sind die vorbestimmten Zustandsinformationen (Referenzinformationen) zum Beispiel in Form einer oder mehrerer Listen oder Tabellen im Kommunikationsnetzwerk hinterlegt. In speziellen Ausführungsformen sind die Zustandsinformationen in der Steuer-Komponente beziehungsweise in der Wächter-Komponente selbst hinterlegt. In alternativen Ausführungsformen sind die vorbestimmten Zustandsinformationen in einer oder mehreren separaten Komponenten der Steueranlage hinterlegt, die ebenfalls im Kommunikationsnetzwerk eingebunden sind und Informationen mit der Steuer-Komponente und/oder mit der Wächter-Komponente austauschen können.

Die vorbestimmten Zustandsinformationen umfassen vorteilhaft Informationen über definierte, das heißt vorbestimmte (korrekte) Zustände des Aktors und/oder der Steuer-Komponente und/oder der Wächter-Komponente. Dies hat den Vorteil, dass durch Vergleich der ersten und/oder zweiten Zustandsinformation mit den vorbestimmten Zustandsinformationen ein Fehler im Aktor, in der Steuer-Komponente oder in der Wächter-Komponente erkennbar ist, selbst wenn dieser Fehler die ersten und zweiten Zustandsinformationen derart beeinflusst, dass diese miteinander übereinstimmen und nicht voneinander abweichen. Dies tritt zum Beispiel bei einem kumulierten Fehler sowohl in der Steuer-Komponente als auch in der Wächter-Komponente oder bei einem Fehler im Aktor auf, der zu übereinstimmenden ersten und zweiten Zustandsinformationen führt. Dennoch ist die Steueranlage auch für derartige Situationen, wie oben erläutert, implementiert, wodurch die erste und/oder die zweite Zustandsinformation mit den vorbestimmten Zustandsinformationen vergleichbar sind, sodass ein Abweichen erfasster Zustände innerhalb der Steueranlage von vordefinierten Zuständen (mittels der vorbestimmten Zustandsinformationen) erkennbar ist. Bei einem solchen Abweichen ist die Steueranlage entsprechend konfiguriert mittels der Steuer-Komponente und/oder mittels der Wächter-Komponente in den sicheren Zustand überführt zu werden.

Auch in Ausführungsformen der Steueranlage, in denen eine Mehrzahl von Steuer-Komponenten und/oder eine Mehrzahl von Wächter-Komponenten eingerichtet ist, ist dies vorteilhaft, weil ein Ausfallen einer oder mehrerer Steuer-Komponenten kumulativ mit einer oder mehreren Wächter-Komponenten (was zu übereinstimmenden ersten und zweiten Zustandsinformationen führen kann) durch andere Steuer- beziehungsweise Wächter-Komponenten erkennbar ist. In diesem Fall sind sämtliche Steuer-Komponenten beziehungsweise Wächter-Komponenten eingerichtet, erste und zweite Zustandsinformationen über das Kommunikationsnetzwerk untereinander auszutauschen und mit den vorbestimmten Zustandsinformationen zu vergleichen, sodass Abweichungen beziehungsweise Fehlerfälle erkennbar sind. Dadurch wird die Sicherheit der Steueranlage weiter erhöht.

In wenigstens einer Ausführungsform der Steueranlage ist das Kommunikationsnetzwerk mittels eines fehlertoleranten Netzwerkprotokolls eingerichtet. Die Steuer-Komponente und die Wächter-Komponente sind eingerichtet, über das fehlertolerante Netzwerkprotokoll des Kommunikationsnetzwerkes zu kommunizieren. Auf diese Weise ist die Steueranlage gegen bösartige beziehungsweise beliebige Fehler eines der Netzwerkteilnehmer (Komponenten) innerhalb des Kommunikationsnetzwerkes abgesichert. Selbst wenn zum Beispiel eine Steuer-Komponente beziehungsweise eine Wächter-Komponente mit verschiedenen anderen Komponenten der Steueranlage divergierende Informationen austauscht, oder falls zum Beispiel hinterlegte vorbestimmte Zustandsinformationen der oben erläuterten Art aufgrund eines Fehlerfalls divergieren (z.B. abweichende oder verfälschte Listen von definierten Zuständen), so ist die Steueranlage aufgrund des fehlertoleranten Netzwerkprotokolls dennoch robust gegen derartige Szenarien. In einer Ausführungsform ist das fehlertolerante Netzwerkprotokoll zum Beispiel ein Protokoll gemäß der sogenannten Byzantinischen Fehlertoleranz (BFT). Dies hat insbesondere in Implementierungen der Steueranlage mit einer größeren Anzahl an Steuerbeziehungsweise Wächter-Komponenten den Vorteil, dass ein beliebiges Falschverhalten einer Minderheit der Komponenten, z. B. eine Verfälschung von vorbestimmten Zustandsinformationen der oben erläuterten Art, dennoch innerhalb der Steueranlage sicher erkannt und verarbeitet werden kann, sodass die Steueranlage geordnet in den sicheren Zustand überführbar ist.

In zumindest einer Ausführungsform der Steueranlage ist für die Steuer-Komponente und für die Wächter-Komponente eine sogenannte Public-Key-Infrastruktur (PKI) konfiguriert. Dies hat den Vorteil, dass eine eindeutige Identifizierung der beteiligten Komponenten über digitale Zertifikate sichergestellt wird. Dies dient ebenfalls Sicherheits-Aspekten, weil dadurch eine Fehleroffenbarung bzw. -erkennung erleichtert wird.

In zumindest einer Ausführungsform der Steueranlage sind ein oder mehrere GPS-Module eingerichtet zur Unterstützung einer Zeitsynchronisation zwischen den beteiligten Komponenten. Dies hat den Vorteil, dass eine Synchronisation zwischen den beteiligten Komponenten sicher durchgeführt werden kann.

In wenigstens einer Ausführungsform der Steueranlage sind die Steuer-Komponente und die Wächter-Komponente eingerichtet, eine zyklische Verarbeitung, insbesondere der ersten und zweiten Zustandsinformationen, durchzuführen. Zum Beispiel erfolgt mit jedem Zyklus ein Einlesen von Informationen seitens des Aktors durch die Steuer-Komponente und/oder die Wächter-Komponente (gegebenenfalls über eine oder mehrere oben erläuterte Erfassungs-Komponenten oder externe Eingabe-Komponenten), ein Verarbeiten/Kommunizieren/Synchronisieren in beziehungsweise zwischen der Steuer-Komponente und der Wächter-Komponente über das Kommunikationsnetzwerk sowie gegebenenfalls ein Ausgeben von Befehlen, Kommandos und so weiter, insbesondere an den Aktor und/oder eine Überführung der Steueranlage in den sicheren Zustand. Eine zyklische Verarbeitung hat den Vorteil, dass einfachere Komponenten einsetzbar sind, die gemäß einem zyklischen Bearbeitungsschema arbeiten. Zudem ist eine Zeitgarantie erreichbar, in der eine jeweils nächste Zustandsänderung innerhalb des Kommunikationsnetzwerkes (synchronisierte Zustände des Aktors, der Steuer-Komponente sowie der Wächter-Komponente oder sonstiger Komponenten) zu festen Zeitpunkten stattfindet. Dies hat den Vorteil, dass nach einem Durchlaufen eines Zyklus eine definierte Reaktion der Steueranlage garantiert ist. Auf diese Weise können Fehlerfälle schnell und dennoch einfach erkannt werden.

In hierzu alternativen Ausführungsformen ist eine nichtzyklische Bearbeitung von Zuständen oder Zustandsinformationen realisiert. Hierbei wird zum Beispiel Event-getriggert eine Zustandsinformation von einer Komponente (Steuer-Komponente oder Wächter-Komponente) an eine entsprechende andere Komponente innerhalb des Kommunikationsnetzwerkes übermittelt, wodurch eine Verarbeitung der Informationen getriggert wird. Eine nichtzyklische Bearbeitung hat den Vorteil einer sehr hohen Flexibilität und eines sehr schnellen Reagierens auf Fehlerfälle.

In diversen Ausführungsformen der Steueranlage ist diese eine Signal-/Stellwerk-Anlage für Schienenfahrzeuge.

Die obige Aufgabe wird gemäß einem zweiten Aspekt durch ein Verfahren gemäß Patentanspruch 9 gelöst, das zum Betreiben einer Steueranlage implementiert ist. Weitere Implementierungen sind in den zugehörigen Unteransprüchen offenbart.

Ein solches Verfahren ist zum Betreiben einer Steueranlage implementiert, die wenigstens einen Aktor, wenigstens eine Steuer-Komponente, wenigstens eine Wächter-Komponente und ein Kommunikationsnetzwerk aufweist. Die Steuer-Komponente steuert den Aktor, wobei die Wächter-Komponente einen Zustand des Aktors überwacht. Das Verfahren umfasst die folgenden Schritte:
- Generieren einer ersten Zustandsinformation durch die Steuer-Komponente,
- Generieren einer zweiten Zustandsinformation durch die Wächter-Komponente,
- Austauschen der ersten und zweiten Zustandsinformationen zwischen der Steuer-Komponente und der Wächter-Komponente über das Kommunikationsnetzwerk,
- Vergleich der (ausgetauschten) ersten und zweiten Zustandsinformationen miteinander und/oder entsprechend mit vorbestimmten Zustandsinformationen durch die Steuer-Komponente und durch die Wächter-Komponente und
- Überführen der Steueranlage in einen sicheren Zustand durch die Steuer-Komponente und/oder durch die Wächter-Komponente, wenn der Vergleich der ersten und zweiten Zustandsinformationen miteinander und/oder entsprechend mit den vorbestimmten Zustandsinformationen ein Abweichen der ersten und zweiten Zustandsinformationen voneinander und/oder entsprechend von den vorbestimmten Zustandsinformationen ergibt.

Ein derartiges Verfahren hat den Vorteil, dass anstelle einer zentralen und aufwändigen Recheneinheit einfache Komponenten (Steuer-Komponente und Wächter-Komponente) eingesetzt werden, die preiswert sind und dennoch eine ausreichend hohe Sicherheit der Funktionen der Steueranlage zur Verfügung stellen. Auf diese Weise ist die Steueranlage kostengünstig implementierbar und mit einem sehr hohen Sicherheitsintegritätslevel betreibbar. Im Übrigen erzielt ein solches Verfahren auch Vorteile und Effekte wie sie im Zusammenhang mit einer Steueranlage oben erläutert sind.

In wenigstens einer Implementierung des Verfahrens umfasst die Steueranlage eine zentrale Energieversorgung zur Versorgung der Steueranlage mit elektrischer Energie, wobei die Steueranlage durch Abschalten der zentralen Energieversorgung durch die (wenigstens eine) Steuer-Komponente und/oder durch die (wenigstens eine) Wächter-Komponente in den sicheren Zustand überführt wird. Das Verfahren hat somit den Vorteil, dass eine ausreichende Beibehaltung eines sicheren Zustandes durch Abschalten der zentralen Energieversorgung ermöglicht wird. Im Übrigen gelten hier die oben im Zusammenhang mit einer entsprechenden Steueranlage erläuterten Vorteile und Effekte analog.

In wenigstens einer Implementierung des Verfahrens umfasst die Steueranlage eine Erfassungs-Komponente, wobei die Erfassungs-Komponente einen Zustand des Aktors erfasst und eine Information über den erfassten Zustand an die Wächter-Komponente übergibt. Hierdurch wird ein Zustand des Aktors auf einfache Weise erfasst und an die Wächter-Komponente weitergegeben. Im Übrigen gelten hier die oben im Zusammenhang mit einer Steueranlage erläuterten Vorteile und Effekte analog.

In zumindest einer Implementierung des Verfahrens überwacht die Wächter-Komponente den Zustand des Aktors rückwirkungsfrei und/oder unabhängig von der Steuer-Komponente. Hierdurch werden die oben im Zusammenhang mit einer Steueranlage erläuterten Vorteile und Effekte analog erzielt.

In wenigstens einer Implementierung des Verfahrens sind im Kommunikationsnetzwerk vorbestimmte Zustandsinformationen über definierte Zustände des Aktors und/oder der Steuer-Komponente und/oder der Wächter-Komponente hinterlegt. In wenigstens einer Implementierung des Verfahrens entsprechen diese vorbestimmten Zustandsinformationen den vorbestimmten Zustandsinformationen der oben erläuterten Art. Das Verfahren ist derart implementiert, dass
- die ersten und/oder zweiten Zustandsinformation mit den vorbestimmten Zustandsinformationen durch die Steuer-Komponente und/oder durch die Wächter-Komponente verglichen werden und
- die Steueranlage in einen sicheren Zustand durch die Steuer-Komponente und/oder durch die Wächter-Komponente überführt wird, wenn der Vergleich der ersten und/oder zweiten Zustandsinformation mit den vorbestimmten Zustandsinformationen ein Abweichen der ersten und/oder zweiten Zustandsinformation von den vorbestimmten Zustandsinformationen ergibt. Die hierzu im Zusammenhang mit der Steueranlage oben erläuterten Vorteile und Effekte werden durch das Verfahren analog erzielt.

In wenigstens einer Implementierung des Verfahrens ist das Kommunikationsnetzwerk mittels eines fehlertoleranten Netzwerkprotokolls eingerichtet, wobei die Steuer-Komponente und die Wächter-Komponente über das fehlertolerante Netzwerkprotokoll des Kommunikationsnetzwerkes kommunizieren. Hierdurch erzielt das Verfahren die oben im Zusammenhang mit einer Steueranlage erläuterten Vorteile und Effekte analog.

Die Steueranlage gemäß dem ersten Aspekt ist vorteilhaft eingerichtet, ein Verfahren gemäß dem zweiten Aspekt durchzuführen.

Die obige Aufgabe wird gemäß einem dritten Aspekt durch ein Steuerprogramm gemäß Patentanspruch 15 gelöst. Das Steuerprogramm ist eingerichtet, innerhalb einer Steueranlage abzulaufen und bei dessen Ablauf innerhalb der Steueranlage ein Verfahren der oben erläuterten Art durchzuführen. Hierbei ist die Steueranlage zum Beispiel gemäß der oben erläuterten Art implementiert.

Sämtliche Merkmale, Implementierungen, Aspekte, Vorteile und Effekte einer Steueranlage gemäß dem ersten Aspekt sind auf entsprechende Merkmale, Implementierungen, Aspekte, Vorteile und Effekte eines Verfahrens gemäß dem zweiten Aspekt übertragbar und umgekehrt.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Dabei zeigen:
- Figur 1: ein erstes Ausführungsbeispiel einer Steueranlage,
- Figur 2: ein zweites Ausführungsbeispiel einer Steueranlage,
- Figur 3: ein erstes Implementierungsbeispiel eines Verfahrens zum Betreiben einer Steueranlage sowie
- Figur 4: ein zweites Implementierungsbeispiel eines Verfahrens zum Betreiben einer Steueranlage.

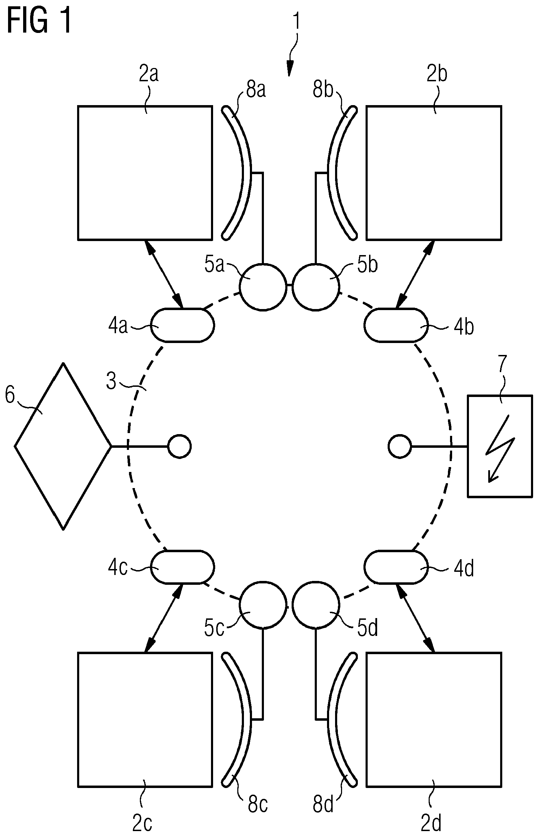

Figur 1 zeigt eine Steueranlage 1 mit mehreren Aktoren 2a bis 2d, mehreren Steuer-Komponenten 4a bis 4d sowie mehreren Wächter-Komponenten 5a bis 5d. Die Steuer-Komponenten 4a bis 4d und die Wächter-Komponenten 5a bis 5d sind an ein Kommunikationsnetzwerk 3 angebunden und eingerichtet im Kommunikationsnetzwerk 3 miteinander zu kommunizieren. Eine jeweilige Steuer-Komponente 4a bis 4d ist einem jeweiligen Aktor 2a bis 2d zugeordnet und eingerichtet, den jeweiligen Aktor 2a bis 2d zu steuern. Konkret ist die Steuer-Komponente 4a dem Aktor 2a zugeordnet, die Steuer-Komponente 4b dem Aktor 2b zugeordnet, die Steuer-Komponente 4c dem Aktor 2c zugeordnet und die Steuer-Komponente 4d dem Aktor 2d zugeordnet. In einer alternativen Ausführungsform sind sämtliche Steuer-Komponenten 4a bis 4d über das Kommunikationsnetzwerk 3 miteinander verschaltet, wobei jeweils eine Steuer-Komponente einen beliebigen der Aktoren 2a bis 2d steuern kann.

Im Ausführungsbeispiel gemäß Figur 1 tauschen die jeweiligen Steuer-Komponenten 4a bis 4d mit den jeweiligen Aktoren 2a bis 2d Informationen, Daten beziehungsweise Signale aus. Dies ist jeweils durch einen bidirektionalen Pfeil zwischen der jeweiligen Steuer-Komponente 4a bis 4d und dem jeweiligen Aktor 2a bis 2d veranschaulicht. Zum Beispiel sendet eine jeweilige Steuer-Komponente 4a bis 4d an einem jeweiligen Aktor 2a bis 2d ein Steuersignal zum Steuern des Aktors 2a bis 2d. Optional erfasst eine jeweilige Steuer-Komponente 4a bis 4d auch einen oder mehrere Zustände des jeweils zugeordneten Aktors 2a bis 2d. Zum Beispiel gibt eine jeweilige Steuer-Komponente 4a bis 4d einen bestimmten Soll-Zustand eines zugeordneten Aktors 2a bis 2d vor, wodurch der jeweilige Aktor 2a bis 2d entsprechend angesteuert wird. Optional wird ein entsprechender Ist-Zustand des Aktors 2a bis 2d an die jeweilige Steuer-Komponente 4a bis 4d zurückgegeben.

In dem Ausführungsbeispiel gemäß Figur 1 ist eine jeweilige Wächter-Komponente 5a bis 5d mit einer von mehreren Erfassungs-Komponenten 8a bis 8d verbunden. Konkret ist gemäß Figur 1 die Wächter-Komponente 5a an die Erfassungs-Komponente 8a angebunden, die Wächter-Komponente 5b an die Erfassungs-Komponente 8b angebunden, die Wächter-Komponente 5c an die Erfassungs-Komponente 8c angebunden und die Wächter-Komponente 5d an die Erfassungs-Komponente 8d angebunden. Die jeweiligen Erfassungs-Komponenten 8a bis 8d sind wiederum einem jeweiligen Aktor 2a bis 2d zugeordnet. Konkret ist die Erfassungs-Komponente 8a dem Aktor 2a, die Erfassungs-Komponente 8b dem Aktor 2b, die Erfassungs-Komponente 8c dem Aktor 2c und die Erfassungs-Komponente 8d dem Aktor 2d zugeordnet. Die jeweiligen Erfassungs-Komponenten 8a bis 8d sind eingerichtet einen oder mehrere Zustände des jeweiligen Aktors 2a bis 2d zu erfassen und eine Information über den erfassten Zustand an die jeweilige Wächter-Komponente 5a bis 5d zu übergeben. Auf diese Weise überwacht eine jeweilige Wächter-Komponente 5a bis 5d einen jeweiligen Zustand des jeweiligen Aktors 2a bis 2d separat und unabhängig von einem jeweiligen Informationsaustausch zwischen einem jeweiligen Aktor 2a bis 2d und einer jeweils zugeordneten Steuer-Komponente 4a bis 4d. Somit sind zwischen den jeweiligen Aktoren 2a bis 2d und den jeweiligen Steuer-Komponenten 4a bis 4d und den jeweiligen Aktoren 2a bis 2d mittels den jeweiligen Erfassungs-Komponenten 8a bis 8d und den jeweiligen Wächter-Komponenten 5a bis 5d separate Kanäle zur Erfassung von Information eingerichtet.

Die jeweilige Erfassungs-Komponente 8a bis 8d ist zum Beispiel ein Sensor zum rückwirkungsfreien Erfassen eines jeweiligen Zustandes des jeweiligen Aktors 2a bis 2d. Die Erfassungs-Komponenten 8a bis 8d umfassen zum Beispiel Fotodetektoren zur rückwirkungsfreien Überwachung des Zustands eines lichtemittierenden Aktors 2a bis 2d, ein Glasfaserkonstrukt zur rückwirkungsfreien Detektion von mechanischen Schaltvorgängen an einem jeweiligen Aktor 2a bis 2d mittels einer Erschütterungsdetektion (sogenanntes Fiber Optic Sensing) oder eine induktive Manschette zur rückwirkungsfreien Detektion von elektrischen Strömen an oder in einem jeweiligen Aktor 2a bis 2d. Die Steuer-Komponenten 4a bis 4d beziehungsweise die Wächter-Komponenten 5a bis 5d sind im Ausführungsbeispiel gemäß Figur 1 preiswerte Kleinstprozessoren mit einer Netzwerkanbindung an das Kommunikationsnetzwerk 3.

Die Steueranlage 1 weist gemäß dem Ausführungsbeispiel aus Figur 1 des Weiteren einen externen Sensor 6 sowie eine zentrale Energieversorgung 7 zur Versorgung der Steueranlage mit elektrischer Energie auf. Der externe Sensor 6 ist eingerichtet zum Erfassen sonstiger externer Eingabesignale oder Informationen. Der externe Sensor 6 ist derart in das Kommunikationsnetzwerk 3 integriert, dass dieser entsprechende Informationen mit den sonstigen Komponenten der Steueranlage 1 austauscht. Die zentrale Energieversorgung 7 ist derart an das Kommunikationsnetzwerk 3 angebunden, dass die zentrale Energieversorgung 7 jeweils über eine der Steuer-Komponenten 4a bis 4d beziehungsweise eine der Wächter-Komponenten 5a bis 5d abgeschaltet werden kann. Auf diese Weise ist die Steueranlage 1 über jede der Steuer-Komponenten 4a bis 4d und jede der Wächter-Komponenten 5a bis 5d abschaltbar. Durch Abschalten der Steueranlage 1 wird diese in einen sicheren Zustand überführt.

Die Steueranlage 1 gemäß dem Ausführungsbeispiel aus Figur 1 ist derart implementiert, dass durch eine Mehrzahl verteilter Komponenten 4a bis 4d und 5a bis 5d ein hohes Maß an Sicherheit erzielt wird. Trotz eines einfachen Aufbaus sämtlicher Komponenten 4a bis 4d und 5a bis 5d wird eine Mehrkanaligkeit in einer Überwachung, Ansteuerung oder Abschaltung einzelner Aktoren 2a bis 2d beziehungsweise der Steueranlage 1 selbst gewährleistet. Ferner ist durch eine Abschaltbarkeit der Steueranlage 1 über die zentrale Energieversorgung 7 ein sicheres Überführen der Steueranlage 1 in einen sicheren Zustand (abgeschalteter Zustand) und ein Beibehalten dieses sicheren Zustandes gewährleistet. Auf diese Weise erfüllt die Steueranlage 1 trotz einer einfachen und kostengünstigen Implementierung einen sehr hohen Sicherheitsintegritätslevel. Eine Ansteuerung, Überwachung und Abschaltung innerhalb der Steueranlage 1 wird über die verteilten Komponenten 4a bis 4d und 5a bis 5d realisiert, die sich derartige Aufgaben teilen und eine mehrkanalige Überwachung bereitstellen.

Die Komponenten 4a bis 4d und 5a bis 5d kommunizieren im Ausführungsbeispiel gemäß Figur 1 innerhalb des Kommunikationsnetzwerkes 3 über ein fehlertolerantes Netzwerkprotokoll, insbesondere ein Netzwerkprotokoll, das gemäß der sogenannten byzantinischen Fehlertoleranz (BFT) implementiert ist. Das Netzwerkprotokoll des Kommunikationsnetzwerkes 3 erlaubt zudem eine schnelle und sichere Synchronisation sämtlicher Komponenten 4a bis 4d und 5a bis 5d zum Austausch von Informationen untereinander, wie nachfolgend näher erläutert wird. Zur eindeutigen Identifizierung der Komponenten 4a bis 4d und 5a bis 5d (und gegebenenfalls weitere Komponenten) sind diese beispielhaft über eine PKI-Infrastruktur verbunden, wodurch Zertifikate zwischen den Komponenten ausgetauscht werden können. Dies dient ebenfalls Sicherheits-Aspekten, weil dadurch eine Fehleroffenbarung erleichtert wird. Zur Unterstützung einer Zeitsynchronisation sind optional GPS-Module im Kommunikationsnetzwerk 3 vorgesehen.

Die jeweiligen Steuer-Komponenten 4a bis 4d generieren jeweils erste Zustandsinformationen, die einen Zustand des jeweiligen Aktors 2a bis 2d und/oder einen jeweiligen Zustand der Steuer-Komponente 4a bis 4d repräsentieren. Die jeweiligen Wächter-Komponenten 5a bis 5d generieren zweite Zustandsinformationen, die Informationen der jeweiligen Erfassungs-Komponenten 8a bis 8d über einen Zustand der jeweiligen Aktoren 2a bis 2d und/oder einen jeweiligen Zustand der Wächter-Komponenten 5a bis 5d selbst repräsentieren. Die ersten und zweiten Zustandsinformationen werden jeweils im intelligenten Kommunikationsnetzwerk 3 zwischen den angebundenen Komponenten 4a bis 4d und 5a bis 5d ausgetauscht. Dies erfolgt zum Beispiel im Rahmen einer Synchronisation sämtlicher Komponenten 4a bis 4d und 5a bis 5d innerhalb des Kommunikationsnetzwerkes 3. In den jeweiligen Komponenten 4a bis 4d und 5a bis 5d werden die ersten und zweiten Zustandsinformationen miteinander und/oder mit dort hinterlegten vorbestimmten Zustandsinformationen verglichen. Die vorbestimmten Zustandsinformationen umfassen beispielsweise Informationen zu vordefinierten Zuständen der Aktoren 2a bis 2d, der Steuer-Komponenten 4a bis 4d und/oder der Wächter-Komponenten 5a bis 5d (und gegebenenfalls weiterer Komponenten).

Durch Vergleich der ersten und zweiten Zustandsinformationen untereinander beziehungsweise mit den vorbestimmten Zustandsinformationen innerhalb der jeweiligen Komponenten 4a bis 4d und 5a bis 5d wird ermittelt, ob die jeweiligen Zustandsinformationen voneinander abweichen oder miteinander übereinstimmen. Für den Fall, dass in wenigstens einer der Komponenten 4a bis 4d und 5a bis 5d (oder über eine übergeordnete Verarbeitungskomponente innerhalb des Kommunikationsnetzwerkes 3) eine Abweichung zwischen den jeweiligen Zustandsinformationen festgestellt wird, so wird auf einen Fehlerfall innerhalb der Steueranlage 1 rückgeschlossen. In diesem Fall erfolgt durch wenigstens eine der Komponenten 4a bis 4d und 5a bis 5d eine Abschaltung der zentralen Energieversorgung 7 der Steueranlage 1, sodass diese in einen stromlosen (sicheren) Zustand überführt wird.

Ein entsprechender Fehler kann zum Beispiel eine Diskrepanz zwischen einem Soll- und einem Ist-Zustand eines jeweiligen Aktors 2a bis 2d sein, wobei ein Soll-Zustand als erste Zustandsinformation in einer jeweiligen Steuer-Komponente 4a bis 4d generiert wird und ein Ist-Zustand durch eine jeweilige Erfassungs-Komponente 8a bis 8d erfasst wird und innerhalb einer jeweiligen Wächter-Komponente 5a bis 5d als zweite Zustandsinformation generiert wird. Durch Synchronisation innerhalb des Kommunikationsnetzwerkes 3 und Vergleich der ersten und zweiten Zustandsinformationen wird folglich eine solche Diskrepanz zwischen Soll-Zustand und Ist-Zustand eines Aktors 2a bis 2d erkannt.

Alternativ oder ergänzend führen bestimmte Zustände der Steuer-Komponenten 4a bis 4d beziehungsweise der Wächter-Komponenten 5a bis 5d selbst zu entsprechenden ersten und zweiten Zustandsinformationen. Diese umfassen zum Beispiel Informationen über einen Normalbetrieb oder einen Fehlerbetrieb/Ausfall der jeweiligen Komponenten 4a bis 4d und 5a bis 5d. Ergibt ein Vergleich der ersten und zweiten Zustandsinformationen in diesem Fall eine Diskrepanz (zum Beispiel zwischen einem Normalbetrieb und einem Fehlerbetrieb), so wird ein derartiges Fehlverhalten der Steueranlage 1 ebenso erkannt.

Alternativ oder ergänzend erfolgt ein Vergleich der ersten und zweiten Zustandsinformationen mit den oben erläuterten vorbestimmten Zustandsinformationen. Weichen die ersten und/oder zweiten Zustandsinformationen von den vorbestimmten Zustandsinformationen ab, so wird ebenfalls auf einen Fehlerfall rückgeschlossen. Ein derartiges Vorgehen hat den Vorteil, dass Fehlerfälle selbst dann erkannt werden, wenn keine Abweichung zwischen den ersten und zweiten Zustandsinformationen, jedoch eine Abweichung zwischen den ersten und/oder zweiten Zustandsinformationen und den vorbestimmten Zustandsinformationen vorliegt. Dies tritt zum Beispiel auf, falls ein zufälliger oder systematischer Fehler in einem der Aktoren 2a bis 2d auftritt, was zu übereinstimmenden ersten und zweiten Zustandsinformationen innerhalb der Komponenten 4a bis 4d beziehungsweise 5a bis 5d führt. Ein Vergleich mit den vorbestimmten Zustandsinformationen führt zu einem Erkennen eines nicht definierten Zustandes des fehlerhaften Aktors 2a bis 2d. Entsprechendes gilt für den Fall, dass ein kumulativer Fehler zum Beispiel in der Steuer-Komponente 4a und der Wächter-Komponente 5a auftritt (zum Beispiel ein Ausfall der beiden Komponenten 4a und 5a), was ebenfalls zu übereinstimmenden ersten und zweiten Zustandsinformationen führen kann. Dennoch wird ein Abweichen dieser ersten und zweiten Zustandsinformationen von vorbestimmten Zustandsinformationen eines definierten Zustands (zum Beispiel Normalbetrieb der Komponenten 4a und 5a) erkannt.

Falls einer der oben dargestellten Fehlerfälle in der Steueranlage 1 auftritt, kann folglich jede der Komponenten 4a bis 4d und 5a bis 5d die zentrale Energieversorgung 7 abschalten und die Steueranlage 1 in den erläuterten sicheren Zustand überführen. Dies hat den Vorteil, dass die Steueranlage 1 ein hohes Maß an einer Einzelfehlersicherheit, aber auch eine Sicherheit bei Auftreten kumulativer Fehler aufweist. Insbesondere reagiert die Steueranlage 1 somit vorteilhaft auf zufällige Fehler (zum Beispiel physischer Ausfall einer oder mehrerer Komponenten der Steueranlage 1) oder auf systematische Fehler (zum Beispiel Fehler in der Programmierung oder fehlerhafte Programmierung einzelner oder mehrerer Komponenten der Steueranlage 1). Die Steueranlage 1 ist daher vorteilhaft SIL2- beziehungsweise SIL3-fähig.

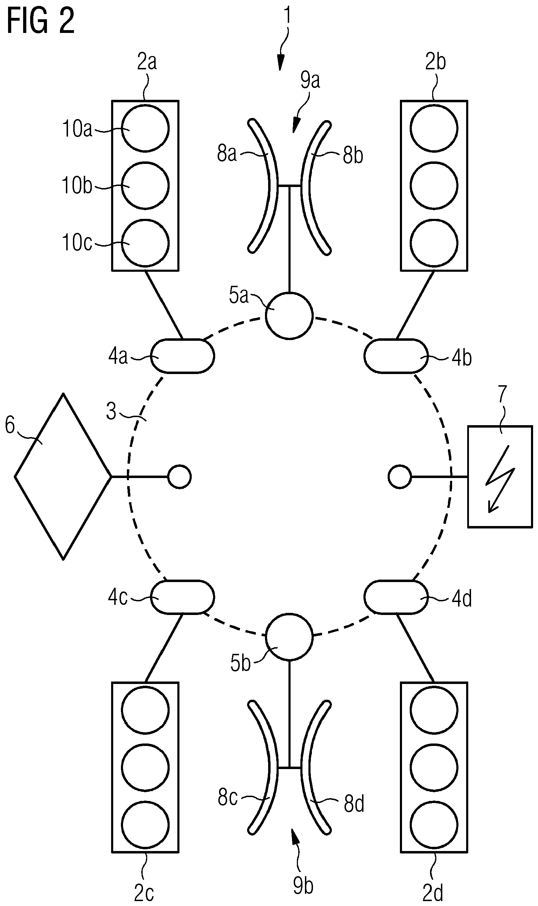

Figur 2 zeigt ein zweites Ausführungsbeispiel einer Steueranlage 1. Die mit gleichen Bezugszeichen versehenen Komponenten entsprechen den Komponenten und ihren Funktionen, wie sie zum Ausführungsbeispiel der Steueranlage 1 gemäß Figur 1 erläutert worden sind.

Im Unterschied zum Ausführungsbeispiel gemäß Figur 1 weist das Ausführungsbeispiel der Steueranlage 1 gemäß Figur 2 lediglich zwei Wächter-Komponenten 5a und 5b auf, die an jeweils ein Erfassungssystem 9a beziehungsweise 9b angebunden sind. Die beiden Erfassungssysteme 9a und 9b umfassen jeweils zwei Erfassungs-Komponenten 8a und 8b beziehungsweise 8c und 8d, die analog zum Ausführungsbeispiel gemäß Figur 1 an die entsprechenden Aktoren 2a bis 2d angebunden sind, um deren Zustände zu erfassen.

Im Ausführungsbeispiel gemäß Figur 2 umfassen die Aktoren 2a bis 2d jeweils mehrere Signalgeber 10a bis 10c, die zum Beispiel Leuchtmittel einer Signalanlage sind. Zum Beispiel dienen die Aktoren 2a und 2b einer Signalisierung für ein Schienenfahrzeug in einer ersten Fahrtrichtung, während die Aktoren 2c und 2d zur Signalisierung für ein Schienenfahrzeug in einer zweiten Fahrtrichtung dienen. Beispielsweise ergeben sich für jeden Aktor 2a bis 2d drei unterschiedliche Leuchtkonfigurationen 10a bis 10c, in denen jeweils ein Signalgeber 10a bis 10c eingeschaltet ist und die anderen Signalgeber 10a bis 10c abgeschaltet sind.

Der externe Sensor 6 im Ausführungsbeispiel gemäß Figur 2 ist zum Beispiel ein Anrücksensor für Straßenfahrzeuge als externer Input der Steueranlage 1. Die Steueranlage 1 gemäß Figur 2 ist zum Beispiel eine Signal-/Stellanlage für Schienenfahrzeuge.

Die jeweiligen Steuer-Komponenten 4a bis 4d können in Abhängigkeit von einem Input des externen Sensors 6 die jeweils zugeordneten Aktoren 2a bis 2d und deren Leuchtkonfigurationen 10a bis 10c entsprechend ansteuern. Leuchtzustände der jeweiligen Aktoren 2a bis 2d werden über die entsprechenden Erfassungs-Komponenten 8a bis 8d erfasst und an die jeweiligen Wächter-Komponenten 5a und 5b übermittelt. Auf diese Weise werden Soll-Zustände der jeweiligen Aktoren 2a bis 2d innerhalb der Steuer-Komponenten 4a bis 4d und Ist-Zustände der jeweiligen Aktoren 2a bis 2d innerhalb der Wächter-Komponenten 5a und 5b verarbeitet und erfasst. Diese Soll- und Ist-Zustände werden durch die beteiligten Komponenten innerhalb des Kommunikationsnetzwerkes 3 zyklisch erfasst, verarbeitet und entsprechend synchronisiert. Die Soll- und Ist-Zustände werden daraufhin jeweils in den beteiligten Komponenten 4a bis 4d beziehungsweise 5a und 5b miteinander verglichen und Abweichungen beziehungsweise Fehler festgestellt. In einem solchen Fall wird die Steueranlage 1 durch entsprechende Kommandoausgabe am Ende eines Zyklus einer Verarbeitung durch eine der Komponenten 4a bis 4d beziehungsweise 5a und 5b über die elektrische Energieversorgung 7 abgeschaltet.

Alternativ oder ergänzend sind im Kommunikationsnetzwerk 3, beispielsweise innerhalb der Komponenten 4a bis 4d und 5a und 5b in Form von Listen zugelassene Leuchtkonfigurationen 10a bis 10c für jeden der Aktoren 2a bis 2d hinterlegt. Auf diese Weise werden abweichende Zustände der Aktoren 2a bis 2d (aufgrund eines Fehlers), z.B. eine Signalisierung "Grün" aller beteiligten Aktoren 2a bis 2d, wie allgemein zum Ausführungsbeispiel gemäß Figur 1 oben erläutert, erkannt, wobei jede der Komponenten 4a bis 4d und 5a beziehungsweise 5b die Steueranlage 1 gemäß den obigen Erläuterungen abschalten kann. Hierdurch werden mögliche systematische Fehler (zum Beispiel ein komplexer Fehler in einer Multifarbendiodendarstellung innerhalb der Aktoren 2a bis 2d) erkannt, weil diese dazu führen würden, dass nicht zugelassene Leuchtkonfigurationen auftreten, die durch Vergleich der entsprechenden ersten und zweiten Zustandsinformationen mit den hinterlegten vorbestimmten Zustandsinformationen erkannt werden.

Ein gefährlicher Zustand der Steueranlage 1 im Ausführungsbeispiel gemäß Figur 2 ist beispielsweise dadurch gegeben, dass es für mindestens einen Aktor 2a und 2b und mindestens einen Aktor 2c und 2d (für verschiedene Fahrtrichtungen, wie oben erläutert) ein grünes Signal, zum Beispiel 10a, für mindestens einen Zyklus der Verarbeitung innerhalb des Kommunikationsnetzwerkes 3 gibt. Dieser gefährliche Zustand kann zum Beispiel erreicht werden, wenn eine äußerst komplexe Art von systematischem Fehler koordiniert und abwechselnd periodisch in allen Steuer-Komponenten 4a bis 4d, den Wächter-Komponenten 5a und 5b sowie in den Erfassungs-Komponenten 8a bis 8d auftritt, damit keiner der am Kommunikationsnetzwerk 3 angebundenen Komponenten die Abweichung von den hinterlegten vorbestimmten Zustandsinformationen (definierte/erlaubte Zustände beziehungsweise Leuchtkonfigurationen 10a bis 10c) erkennt und für eine sofortige Abschaltung der Steueranlage 1 sorgt. Aufgrund der oben erläuterten zyklischen Prozessverarbeitung können systematische Fehler dieser Art faktisch ausgeschlossen werden.

Weitere zufällige Gefährdungsursachen sind zum Beispiel durch einen physischen Ausfall einer oder mehrerer Komponenten der Steueranlage 1 gegeben. Aufgrund eines Abgleichs der ersten und zweiten Zustandsinformationen untereinander beziehungsweise mit vorbestimmten Zustandsinformationen, wie oben erläutert, kann durch zyklische Synchronisation innerhalb des Kommunikationsnetzwerkes 3 jede der Komponenten 4a bis 4d beziehungsweise 5a und 5b spätestens am Ende eines Zyklus eine Abweichung erkennen, sodass spätestens nach einem Zyklus ein Fehler der Steueranlage 1 erkannt wird und eine Abschaltung ausgelöst wird.

So wird selbst ein Ausfall der Steuer-Komponenten 4a und 4b sowie der Wächter-Komponente 5a durch zyklische Synchronisation innerhalb des Kommunikationsnetzwerkes 3 von wenigstens einer der anderen Komponenten 4c und 4d beziehungsweise 5b erkannt, falls die Zustände der ausgefallenen Komponenten 4a, 4b und 5a von vorbestimmten Zuständen abweichen. Zufällige Fehler der Aktoren 2a bis 2d werden ebenfalls nach spätestens einem Zyklus erkannt. Zufällige Fehler des Anrücksensors 6 sind ausschließlich verfügbarkeitsrelevant. Zufällige Fehler bei der Abschaltung der zentralen Energieversorgung 7 werden vorteilhaft durch mehrkanalige Ausfertigung beherrscht.

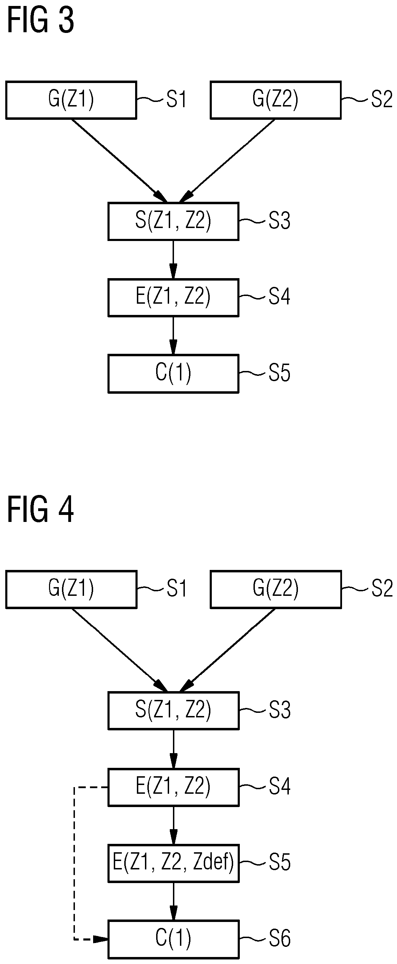

Figur 3 zeigt ein erstes Implementierungsbeispiel eines Verfahrens zum Betreiben einer Steueranlage 1. Eine solche Steueranlage ist zum Beispiel gemäß einer der Ausführungsformen aus Figur 1 und Figur 2 konstruiert. In einem Schritt S1 erfolgt das Generieren G einer ersten Zustandsinformation Z1, zum Beispiel durch eine Steuer-Komponenten 4a bis 4d der oben erläuterten Art. In einem Schritt S2 erfolgt eine Generierung G einer zweiten Zustandsinformation Z2, zum Beispiel durch eine Wächter-Komponenten 5a bis 5d der oben erläuterten Art. In einem weiteren Schritt S3 erfolgt ein Austauschen beziehungsweise Synchronisieren S der ersten und zweiten Zustandsinformationen Z1 und Z2, zum Beispiel zwischen sämtlichen Steuer-Komponenten 4a bis 4d und sämtlichen Wächter-Komponenten 5a bis 5d über das Kommunikationsnetzwerk 3, wie oben erläutert. In einem Schritt S4 erfolgt ein Vergleich E der ausgetauschten ersten und zweiten Zustandsinformationen Z1 und Z2, zum Beispiel durch die Steuer-Komponenten 4a bis 4d und/oder durch die Wächter-Komponenten 5a bis 5d, wie oben erläutert. In einem Schritt S5 erfolgt schließlich ein Überführen C der Steueranlage 1 in einen sicheren Zustand, zum Beispiel durch eine der Steuer-Komponenten 4a bis 4d und/oder eine der Wächter-Komponenten 5a bis 5d, wie oben erläutert, wenn der Vergleich E der ersten und zweiten Zustandsinformationen Z1 und Z2 in Schritt S4 ein Abweichen der ersten und zweiten Zustandsinformationen Z1 und Z2 voneinander ergibt.

Figur 4 zeigt ein zweites Implementierungsbeispiel eines Verfahrens zum Betreiben einer Steueranlage 1, die beispielsweise gemäß einer der Ausführungsformen aus Figur 1 und Figur 2 konstruiert ist. Das Implementierungsbeispiel gemäß Figur 4 umfasst die Verfahrensschritte, wie sie zu Figur 3 erläutert worden sind. Alternativ oder ergänzend zu einem Schritt S4 gemäß Figur 3 erfolgt bei der Implementierung gemäß Figur 4 ein weiterer Schritt S5, in dem ein weiterer Vergleich E der ersten und/oder zweiten Zustandsinformation Z1 und Z2 mit vorbestimmten Zustandsinformationen Zdef erfolgt, was zum Beispiel durch eine der Steuer-Komponenten 4a bis 4d und/oder durch eine der Wächter-Komponenten 5a bis 5d, wie oben erläutert, durchgeführt wird. Die vorbestimmten Zustandsinformationen Zdef sind zum Beispiel solche vorbestimmten Zustandsinformationen, wie sie im Zusammenhang mit den Ausführungsbeispielen gemäß den Figuren 1 und 2 oben erläutert worden sind.

Des Weiteren erfolgt in einem Schritt S6 im Implementierungsbeispiel gemäß Figur 4 ein Überführen C der Steueranlage 1 in den sicheren Zustand, zum Beispiel durch eine Steuer-Komponente 4a bis 4d und/oder durch eine Wächter-Komponente 5a bis 5d, wie oben erläutert, wenn der Vergleich E in Schritt S4 und/oder der Vergleich E in Schritt S5 ergeben hat, dass ein Abweichen der ersten und/oder zweiten Zustandsinformationen Z1 und Z2 untereinander beziehungsweise von den vorbestimmten Zustandsinformationen Zdef vorliegt.

Die dargestellten Ausführungsbeispiele und Implementierungsbeispiele sind lediglich beispielhaft gewählt. Dabei können verschiedene Varianten vorgesehen werden. Zum Beispiel ist das Kommunikationsnetzwerk 3 in den Ausführungsbeispielen der Figuren 1 und 2 entweder als kabelgebundenes Netzwerk oder als Drahtlos-Netzwerk konfiguriert. In einer zum Ausführungsbeispiel gemäß Figur 2 alternativen Ausführungsform können analog zum Ausführungsbeispiel gemäß Figur 1 mehr als zwei Wächter-Komponenten 5a und 5b, insbesondere zum Beispiel vier Wächter-Komponenten 5a bis 5d, eingerichtet sein, die jeweils einer Erfassungs-Komponente 8a bis 8d zugeordnet sind. Eine Steueranlage 1 ist zum Beispiel eine Signal-/Stellwerk-Anlage für Schienenfahrzeuge, insbesondere elektrische Schienenfahrzeuge, oder alternativ eine Signalanlage im Straßenverkehr. Alternativ ist die Steueranlage 1 eine Steueranlage innerhalb einer industriellen Anlage oder innerhalb eines Gebäudeautomatisierungssystems.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Steueranlage
- 2a bis 2d: Aktor
- 3: Kommunikationsnetzwerk
- 4a bis 4d: Steuer-Komponente
- 5a bis 5d: Wächter-Komponente
- 6: externer Sensor
- 7: zentrale Energieversorgung
- 8a bis 8d: Erfassungs-Komponente
- 9a, 9b: Erfassungssystem
- 10a bis 10c: Signalgeber/Leuchtkonfiguration
- Z1: erste Zustandsinformation
- Z2: zweite Zustandsinformation
- Zdef: vorbestimmte Zustandsinformation
- G: Generieren
- S: Austauschen
- E: Vergleich
- C: Überführen
- S1 bis S6: Verfahrensschritte

## Patentansprüche

1. Steueranlage (1) mit:
- wenigstens einem Aktor (2a,...,2d),
- einer Mehrzahl m an Steuer-Komponenten (4a,...,4d), die eingerichtet sind den wenigstens einen Aktor (2a,..., 2d) zu steuern und wenigstens eine erste Zustandsinformation (Z1) zu generieren,
- einer Mehrzahl n von Wächter-Komponenten (5a,...,5d), die eingerichtet sind einen Zustand des wenigstens einen Aktors (2a,..., 2d) zu überwachen und wenigstens eine zweite Zustandsinformation (Z2) zu generieren, sowie
- einem Kommunikationsnetzwerk (3), wobei im Kommunikationsnetzwerk eine oder mehrere vorbestimmte Zustandsinformationen (Zdef) über definierte Zustände des Aktors (2a,...,2d) und/oder der Steuer-Komponente und/oder der Wächter-Komponente hinterlegt sind,
- eine zentrale Energieversorgung (7) zur Versorgung der Steueranlage (1) mit elektrischer Energie,
wobei die Wächter-Komponenten (5a,...,5d) und die Steuer-Komponenten (4a,...,4d)
- in das Kommunikationsnetzwerk (3) eingebunden sind, und
- eingerichtet sind, untereinander die ersten und zweiten Zustandsinformationen (Z1, Z2) über das Kommunikationsnetzwerk (3) auszutauschen und
- eingerichtet sind, die ersten und zweiten Zustandsinformationen (Z1, Z2) miteinander und/oder entsprechend mit den vorbestimmten Zustandsinformationen (Zdef) zu vergleichen, und
- eingerichtet sind, zum Überführen der Steueranlage (1) in einen sicheren Zustand, die zentrale Energieversorgung (7) abzuschalten , wenn ein Vergleich der ersten und zweiten Zustandsinformationen (Z1, Z2) miteinander und/oder entsprechend mit den vorbestimmten Zustandsinformationen (Zdef) ein Abweichen der ersten und zweiten Zustandsinformationen (Z1, Z2) voneinander und/oder entsprechend von den vorbestimmten Zustandsinformationen (Zdef) ergibt,
wobei
- die ersten und zweiten Zustandsinformationen (Z1, Z2) kombinierte Informationen sowohl über Zustände der Steuer-Komponente (4a,...,4d) und der Wächter-Komponente (5a,...,5d) als auch über einen oder mehrere Zustände des Aktors (2a, ..., 2d) sind und
- die erste Zustandsinformation (Z1) eine Information über einen durch die Steuer-Komponente (4a,...,4d) erfassten Zustand des Aktors (2a,...,2d) und die zweite Zustandsinformation (Z2) eine Information über einen von der Wächter-Komponente (5a, ...,5d) erfassten Zustand des Aktors enthält und
- die erste Zustandsinformation (Z1) eine Information über den Zustand der Steuer-Komponente (4a,...,4d) und die zweite Zustandsinformation (Z2) eine Information über einen Zustand der Wächter-Komponente (5a, ...,5d) enthält.

2. Steueranlage (1) nach Anspruch 1, wobei das Kommunikationsnetzwerk (3) als Drahtlos-Netzwerk eingerichtet ist.

3. Steueranlage (1) nach einem der Ansprüche 1 bis 2,
- weiter aufweisend wenigstens eine Erfassungs-Komponente (8a,...,8d),
- wobei die Erfassungs-Komponente (8a,...,8d) eingerichtet ist, einen Zustand des Aktors (2a, ..., 2d) zu erfassen und eine Information über den erfassten Zustand an zumindest einer der Wächter-Komponenten (5a,...,5d) zu übergeben.

4. Steueranlage (1) nach einem der Ansprüche 1 bis 3, wobei die Wächter-Komponenten (5a, ...,5d) eingerichtet sind, den Zustand des Aktors (2a,...,2d) rückwirkungsfrei und/oder unabhängig von der Steuer-Komponente (4a,...,4d) zu überwachen.

5. Steueranlage (1) nach einem der Ansprüche 1 bis 4, wobei
- das Kommunikationsnetzwerk (3) mittels eines fehlertoleranten Netzwerkprotokolls eingerichtet ist und
- die Steuer-Komponenten (4a,...,4d) und die Wächter-Komponenten (5a, ...,5d) eingerichtet sind, über das fehlertolerante Netzwerkprotokoll des Kommunikationsnetzwerkes (3) zu kommunizieren.

6. Steueranlage (1) nach einem der Ansprüche 1 bis 5, wobei die Steueranlage (1) eine Signal-/Stellwerk-Anlage für Schienenfahrzeuge ist.

7. Verfahren zum Betreiben einer Steueranlage (1), die
- wenigstens einen Aktor (2a,...,2d),
- eine Mehrzahl m von Steuer-Komponenten (4a,...,4d),
- eine Mehrzahl n von Wächter-Komponenten (5a,...,5d),
- ein Kommunikationsnetzwerk (3) und
- eine zentrale Energieversorgung (7) zur Versorgung der Steueranlage (1) mit elektrischer Energie aufweist, wobei im Kommunikationsnetzwerk eine oder mehrere vorbestimmte Zustandsinformationen (Zdef) über definierte Zustände des Aktors (2a,...,2d) und/oder der Steuer-Komponente und/oder der Wächter-Komponente hinterlegt werden,
- wobei die Steuer-Komponenten (4a,...,4d) den Aktor (2a,...2d) steuern und
- wobei die Wächter-Komponenten (5a, ...,5d) einen Zustand des Aktors (2a,...,2d) überwachen, umfassend die folgenden Schritte:
- Generieren (G) einer ersten Zustandsinformation (Z1) durch mindestens eine der Steuer-Komponenten (4a,...,4d),
- Generieren (G) einer zweiten Zustandsinformation (Z2) durch mindestens eine der Wächter-Komponenten (5a,...,5d),
- Austauschen (S) der ersten und zweiten Zustandsinformationen (Z1, Z2) zwischen den Steuer-Komponenten (4a,...,4d) und den Wächter-Komponenten (5a,...,5d) über das Kommunikationsnetzwerk (3),
- Vergleich (E) der ersten und zweiten Zustandsinformationen (Z1, Z2) miteinander und/oder entsprechend mit vorbestimmten Zustandsinformationen (Zdef) durch die Steuer-Komponenten (4a,...,4d) und durch die Wächter-Komponenten (5a,...,5d),
- Überführen (C) der Steueranlage (1) durch die Steuer-Komponenten (4a,...,4d) und/oder durch die Wächter-Komponenten (5a, ...,5d) durch Abschalten der zentralen Energieversorgung (7) in einen sicheren Zustand, , wenn der Vergleich (E) der ersten und zweiten Zustandsinformationen (Z1, Z2) miteinander und/oder entsprechend mit den vorbestimmten Zustandsinformationen (Zdef) ein Abweichen der ersten und zweiten Zustandsinformationen (Z1, Z2) voneinander und/oder entsprechend von den vorbestimmten Zustandsinformationen (Zdef) ergibt,
wobei
- die ersten und zweiten Zustandsinformationen (Z1, Z2) kombinierte Informationen sowohl über Zustände der Steuer-Komponente (4a,...,4d) und der Wächter-Komponente (5a,...,5d) als auch über einen oder mehrere Zustände des Aktors (2a, ..., 2d) sind und
- die erste Zustandsinformation (Z1) eine Information über einen durch die Steuer-Komponente (4a,...,4d) erfassten Zustand des Aktors (2a,...,2d) und die zweite Zustandsinformation (Z2) eine Information über einen von der Wächter-Komponente (5a,...,5d) erfassten Zustand des Aktors enthält und
- die erste Zustandsinformation (Z1) eine Information über den Zustand der Steuer-Komponente (4a,...,4d) und die zweite Zustandsinformation (Z2) eine Information über einen Zustand der Wächter-Komponente (5a, ...,5d) enthält.

8. Verfahren nach Anspruch 7, wobei
- die Steueranlage (1) mindestens eine Erfassungs-Komponente (8a,...,8d) umfasst und
- die Erfassungs-Komponente (8a,...,8d) einen Zustand des Aktors (2a,...,2d) erfasst und eine Information über den erfassten Zustand an mindestens eine der Wächter-Komponenten (5a,...,5d) übergibt.

9. Verfahren nach einem der Ansprüche 7 bis 8, wobei die Wächter-Komponenten (5a, ...,5d) den Zustand des wenigstens einen Aktors (2a,...,2d) rückwirkungsfrei und/oder unabhängig von der Steuer-Komponente (4a,...,4d) überwachen.

10. Verfahren nach einem der Ansprüche 7 bis 9, wobei das Kommunikationsnetzwerk (3) mittels eines fehlertoleranten Netzwerkprotokolls eingerichtet ist und die Steuer-Komponenten (4a,...,4d) und die Wächter-Komponenten (5a,...,5d) über das fehlertolerante Netzwerkprotokoll des Kommunikationsnetzwerkes (3) kommunizieren.

11. Steuerprogramm, das eingerichtet ist innerhalb einer Steueranlage (1) abzulaufen und das bei dessen Ablauf innerhalb der Steueranlage (1) ein Verfahren nach einem der Ansprüche 7 bis 10 durchführt.

## Claims

1. Control installation (1) with:
- at least one actuator (2a,...,2d),
- a plurality m of control components (4a,...,4d), which are configured to control the at least one actuator (2a,...,2d) and to generate at least one first item of status information (Z1),
- a plurality n of guard components (5a,...,5d), which are configured to monitor a state of the at least one actuator (2a,...,2d) and to generate at least one second item of status information (Z2), as well as
- a communication network (3), wherein one or more items of predefined status information (Zdef) regarding defined statuses of the actuator (2a,...,2d) and/or the control component and/or the guard component are stored in the communication network,
- a central energy supply (7) for supplying the control installation (1) with electrical energy,
wherein the guard components (5a,...,5d) and the control components (4a,...,4d)
- are integrated into the communication network (3), and
- are configured to exchange the first and second items of status information (Z1, Z2) with one another via the communication network (3) and
- are configured to compare the first and second items of status information (Z1, Z2) with one another and/or accordingly with the predetermined items of status information (Zdef), and
- are configured to switch off the central energy supply (7), in order to transfer the control installation (1) into a safe state, when a comparison of the first and second items of status information (Z1, Z2) with one another and/or accordingly with the predetermined items of status information (Zdef) reveals a deviation of the first and second items of status information (Z1, Z2) from one another and/or accordingly from the predetermined items of status information (Zdef),
wherein
- the first and second items of status information (Z1, Z2) are combined information both regarding statuses of the control component (4a,...,4d) and the guard components (5a,...,5d) and regarding one or more statuses of the actuator (2a,...,2d) and
- the first item of status information (Z1) contains an item of information regarding a status of the actuator (2a,...,2d) that has been recorded by the control component (4a,...,4d) and the second item of status information (Z2) is an item of information regarding a status of the actuator (2a,...,2d) that has been recorded by the guard component (5a,...,5d) and
- the first item of status information (Z1) contains an item of information regarding the status of the control component (4a,...,4d) and the second item of status information (Z2) contains an item of information regarding a status of the guard component (5a,...5d) .

2. Control installation (1) according to claim 1, wherein the communication network (3) is configured as a wireless network.

3. Control installation (1) according to one of claims 1 to 2,
- further having at least one recording component (8a,...,8d),
- wherein the recording component (8a,...,8d) is configured to record a status of the actuator (2a,...,2d) and to forward an item of information regarding the recorded status to at least one of the guard components (5a,...,5d).

4. Control installation (1) according to one of claims 1 to 3, wherein the guard components (5a,...,5d) are configured to monitor the status of the actuator (2a,...,2d) in a reaction-free manner and/or independently of the control component (4a,...,4d).

5. Control installation (1) according to one of claims 1 to 4, wherein
- the communication network (3) is configured by means of a fault-tolerant network protocol and
- the control components (4a,...,4d) and the guard components (5a,...,5d) are configured to communicate via the fault-tolerant network protocol of the communication network (3).

6. Control installation (1) according to one of claims 1 to 5, wherein the control installation (1) is a signal/interlocking installation for rail vehicles.

7. Method for operating a control installation (1), which has
- at least one actuator (2a,...,2d),
- a plurality m of control components (4a,...,4d),
- a plurality n of guard components (5a,...,5d),
- a communication network (3) and
- a central energy supply (7) for supplying the control installation (1) with electrical energy,
wherein one or more predetermined items of status information (Zdef) regarding defined statuses of the actuator (2a,...,2d) and/or the control component and/or the guard component are stored in the communication network,
- wherein the control components (4a,...,4d) control the actuator (2a,...,2d) and
- wherein the guard components (5a,...,5d) monitor a status of the actuator (2a,...,2d), comprising the following steps:
- generating (G) a first item of status information (Z1) by way of at least one of the control components (4a,...,4d),
- generating (G) a second item of status information (Z2) by way of at least one of the guard components (5a,...,5d),
- exchanging (S) the first and second items of status information (Z1, Z2) between the control components (4a,...,4d) and the guard components (5a,....,5d) via the communication network (3),
- comparing (E) the first and second items of status information (Z1, Z2) with one another and/or accordingly with predetermined items of status information (Zdef) by way of the control components (4a,...,4d) and by way of the guard components (5a,...,5d),
- transferring (C) the control installation (1) into a safe status by way of the control components (4a,...,4d) and/or by way of the guard components (5a,...,5d) by switching off the central energy supply (7), when the comparison (E) of the first and second items of status information (Z1, Z2) with one another and/or accordingly with the predetermined items of status information (Zdef) reveals a deviation of the first and second items of status information (Z1, Z2) from one another and/or accordingly from the predetermined items of status information (Zdef),
wherein
- the first and second items of status information (Z1, Z2) are combined information both regarding statuses of the control component (4a,...,4d) and the guard components (5a,...,5d) and regarding one or more statuses of the actuator (2a,...,2d) and
- the first item of status information (Z1) contains an item of information regarding a status of the actuator (2a,...,2d) that has been recorded by the control component (4a,...,4d) and the second item of status information (Z2) is an item of information regarding a status of the actuator that has been recorded by the guard component (5a,...,5d) and
- the first item of status information (Z1) contains an item of information regarding the status of the control component (4a,...,4d) and the second item of status information (Z2) contains an item of information regarding a status of the guard component (5a,...5d).

8. Method according to claim 7, wherein
- the control installation (1) comprises at least one recording component (8a,...,8d) and
- the recording component (8a,...,8d) records a status of the actuator (2a,...,2d) and forwards an item of information regarding the recorded status to at least one of the guard components (5a,...,5d).

9. Method according to one of claims 7 to 8, wherein the guard components (5a,...,5d) monitor the status of the at least one actuator (2a,...,2d) in a reaction-free manner and/or independently of the control component (4a,...,4d).

10. Method according to one of claims 7 to 9, wherein the communication network (3) is configured by means of a fault-tolerant network protocol and the control components (4a,...,4d) and the guard components (5a,...,5d) communicate via the fault-tolerant network protocol of the communication network (3).

11. Computer program, which is configured to run within a control installation (1) and, when it is run within the control installation (1), performs a method according to one of claims 7 to 10.

## Revendications

1. Installation (1) de commande comprenant :
- au moins un actionneur (2a,...,2d),
- une pluralité m de composants (4a,...,4d) de commande, qui sont agencés pour commander le au moins un actionneur (2a,...,2d) et pour créer au moins une première information (Z1) d'état,
- une pluralité n de composants (5a,...,5d) de contrôle, qui sont agencés pour contrôler un état du au moins un actionneur (2a,...,2d) et pour créer au moins une deuxième information (Z2) d'état, ainsi que
- un réseau (3) de communication, dans laquelle, dans le réseau de communication, sont mises en mémoire une ou plusieurs informations (Zdef) d'état déterminées à l'avance sur des états définis de l'actionneur (2a,...,2d) et/ou des composants de commande et/ou des composants de contrôle,
- une alimentation (7) centrale en énergie pour l'alimentation de l'installation (1) de commande en énergie électrique,
dans laquelle les composants (5a,...,5d) de contrôle et les composants (4a,...,4d) de commande
- sont incorporés dans le réseau (3) de communication et
- sont agencés pour échanger entre eux les premières et deuxièmes informations (Z1, Z2) d'état en passant par le réseau (3) de communication et
- sont agencés, pour comparer les premières et deuxièmes informations (Z1, Z2) d'état entre elles et/ou correspondants aux informations (Zdef) d'état déterminées à l'avance, et
- sont agencés pour faire passer l'installation (1) de commande dans un état sécurisé, interrompre l'alimentation (7) centrale en énergie, si une comparaison des premières et deuxièmes informations (Z1, Z2) d'état entre elles et/ou avec les informations (Zdef) d'état déterminées à l'avance, donne un écart entre les premières et deuxièmes informations (Z1, Z2) d'état entre elles et/ou avec les informations (Zdef) d'état déterminées à l'avance,
dans laquelle
- les première et deuxième informations (Z1, Z2) d'état sont des informations combinées tant sur des états des composants (4a,...,4d) de commande et des composants (5a,...,5d) de contrôle qu'également sur un ou plusieurs états de l'actionneur (2a,...,2d) et
- la première information (Z1) d'état contient une information sur un état de l'actionneur (2a,...,2d) détecté par des composants (4a,...,4d) de commande et la deuxième information (Z2) d'état contient une information sur un état de l'actionneur détecté par les composants (5a,...,5d) de contrôle et
- la première information (Z1) d'état contient une information sur l'état des composants (4a,...,4d) de commande et la deuxième information (Z2) d'état contient une information sur un état des composants (5a,...,5d) de contrôle.

2. Installation (1) suivant la revendication 1, dans laquelle le réseau (3) de communication est agencé sous la forme d'un réseau sans fil.

3. Installation (1) suivant l'une des revendications 1 à 2,
- comportant en outre au moins un composant (8a,...,8d) de détection,
- dans laquelle le composant (8a,...,8d) de détection est agencé pour détecter un état de l'actionneur (2a,...,2d) et pour transmettre une information sur l'état détecté à au moins l'un des composants (5a,...,5d) de contrôle.

4. Installation (1) suivant l'une des revendications 1 à 3, dans laquelle les composants (5a,...,5d) de contrôle sont agencés pour contrôler l'état de l'actionneur (2a,...,2d) sans réaction et/ou indépendamment des composants (4a,...,4d) de commande.

5. Installation (1) suivant l'une des revendications 1 à 4, dans laquelle
- le réseau (3) de communication est agencé au moyen d'un protocole de réseau tolérant à l'erreur et
- les composants (4a,...,4d) de commande et les composants (5a,...,5d) de contrôle sont agencés pour communiquer par le protocole de réseau tolérant à l'erreur du réseau (3) de communication.

6. Installation (1) suivant l'une des revendications 1 à 5, dans laquelle l'installation (1) de commande est une installation de signal/poste d'aiguillage de véhicules ferroviaires.

7. Procédé pour faire fonctionner une installation (1) de commande, qui comprend
- au moins un actionneur (2a,...,2d),
- une pluralité m de composants (4a,...,4d) de commande,
- une pluralité n de composants (5a,...,5d) de contrôle,
- un réseau (3) de communication et
- une alimentation (7) centrale en énergie pour l'alimentation de l'installation (1) de commande en énergie électrique,
dans lequel on met en mémoire dans le réseau de communication une ou plusieurs informations (Zdef) d'état déterminées à l'avance sur des états définis de l'actionneur (2a,...,2d) et/ou des composants de commande et/ou des composants de contrôle,
- dans lequel les composants (4a,...,4d) de commande commandent l'actionneur (2a,...,2d) et
- dans lequel les composants (5a,...,5d) de contrôle contrôlent un état de l'actionneur (2a,...,2d), comprenant les stades suivants :
- création (G) d'une première information (Z1) d'état par au moins l'un des composants (4a,...,4d) de commande,
- création (G) d'une deuxième information (Z2) d'état par au moins l'un des composants (5a,...,5d) de contrôle,
- échange (S) des premières et deuxièmes informations (Z1, Z2) d'état entre les composants (4a,...,4d) de commande et les composants (5a,...,5d) de contrôle en passant par le réseau (3) de communication,
- comparaison (E) par les composants (4a,...,4d) de commande et par les composants (5a,...,5d) de contrôle des premières et deuxièmes informations (Z1, Z2) d'état entre elles et/ou correspondants à des informations (Zdef) d'état déterminées à l'avance,
- passage (C) de l'installation (1) de commande par les composants (4a,...,4d) de commande et/ou par les composants (5a,...,5d) de contrôle par interruption de l'alimentation (7) centrale en énergie dans un état sécurisé, si la comparaison (E) des première et deuxième informations (Z1, Z2) d'état entre elles et/ou correspondants aux informations (Zdef) d'état déterminées à l'avance, donne un écart entre les premières et deuxièmes informations (Z1, Z2) d'état entre elles et/ou correspondants aux informations (Zdef) d'état déterminées à l'avance,
dans lequel
- les premières et deuxièmes informations (Z1, Z2) d'état sont des informations combinées tant sur des états des composants (4a,...,4d) de commande et des composants (5a,...,5d) de contrôle qu'également sur un ou plusieurs états de l'actionneur (2a,...,2d) et
- la première information (Z1) d'état contient une information sur un état de l'actionneur (2a,...,2d) détecté par des composants (4a,...,4d) de commande et la deuxième information (Z2) d'état contient une information sur un état de l'actionneur détecté par les composants (5a,...,5d) de contrôle et
- la première information (Z1) d'état contient une information sur l'état des composants (4a,...,4d) de commande et la deuxième information (Z2) d'état contient une information sur un état des composants (5a,...,5d) de contrôle.

8. Procédé suivant la revendication 7, dans lequel
- l'installation (1) de commande comprend au moins un composant (8a,...,8d) de détection et
- le composant (8a,...,8d) de détection détecte un état de l'actionneur (2a,...,2d) et transmet une information sur l'état détecté à au moins l'un des composants (5a,...,5d) de contrôle.

9. Procédé suivant l'une des revendications 7 à 8, dans lequel les composants (5a,...,5d) de contrôle contrôlent l'état du au moins un actionneur (2a,...,2d) sans réaction et/ou indépendamment des composants (4a,...,4d) de commande.

10. Procédé suivant l'une des revendications 7 à 9, dans lequel le réseau (3) de communication est agencé au moyen d'un protocole de réseau tolérant à l'erreur et les composants (4a,...,4d) de commande et les composants (5a,...,5d) de contrôle communiquent en passant par le protocole de réseau tolérant à l'erreur du réseau (3) de communication.

11. Programme de commande, qui se déroule en étant agencé à l'intérieur d'une installation (1) de commande et dont le déroulement à l'intérieur de l'installation (1) de commande exécute un procédé suivant l'une des revendications 7 à 10.
